(19) Europäisches Patentamt
European Patent Office
Office européen des brevets

(11) Publication number: **0 462 368 A1**

(12) **EUROPEAN PATENT APPLICATION**

(21) Application number: **91105392.4**

(51) Int. Cl.5: **G11B 7/24**

(22) Date of filing: **05.04.91**

(30) Priority: **19.06.90 JP 158698/90**

(43) Date of publication of application: **27.12.91 Bulletin 91/52**

(84) Designated Contracting States: **DE FR GB NL**

(71) Applicant: **MITSUI TOATSU CHEMICALS, INCORPORATED**
**2-5, 3-chome, Kasumigaseki**
**Chiyoda-ku Tokyo(JP)**

(72) Inventor: **Itoh, Hisato**
**2882-2-18, Iijimacho Sakae-ku**
**Yokohama-shi, Kanagawa-ken(JP)**
Inventor: **Oguchi, Takahisa**
**3-42-7-122, Hirado Totsuka-ku**
**Yokohama-shi, Kanagawa-ken(JP)**
Inventor: **Enomoto, Katashi**
**4-10-8, Hisagi Zushi-shi**
**Kanagawa-ken(JP)**

(74) Representative: **Schüler, Horst, Dr.**
**Patentanwalt, Kaiserstrasse 69**
**W-6000 Frankfurt/Main 1(DE)**

(54) **Optical data storage card.**

(57) The invention discloses an optical data storage card which has a laminated constitution in the order: transparent substrate, recording layer and protective layer, and is prepared by using in the recording layer a colorant having a melting point in the range of 150 to 300 ° C, a decomposition initiating temperature in the range of 200 to 350 ° C, and λmax in the range of 730 to 790 nm.

The card has a high sensitivity, small distortion in record, high durability, and its quality becomes more stable as compared with conventional cards.

EP 0 462 368 A1

## Background of the Invention

1) Field of the Invention

The present invention relates to an optical data storage card used for recording and storage of information.

2) Description of the Related Art

Optical data storage cards obtained by adhering a recording layer, that is, an optical absorption layer onto a substrate and further laminating other layers have been disclosed in Japanese Laid-Open Patent 138382 (1990), 130737 (1990), 122438 (1990) and 118917 (1990).

Alkylphthalocyanine which constitutes the recording layer disclosed in Japanese Laid-Open Patent 138382 (1990) could not provide sensitivity required for the optical data storage cards. The optical data storage cards described in the examples of Japanese Laid-Open Publication 130737 (1990) were poor in sensitivity and durability and could not satisfy requirement that the cards had reflectance of 30% or more in the absorption wavelength ranging from 780 to 830 nm.

Japanese Laid-Open Patent 122438 (1990) disclosed an optical data storage card having the same constitution of layers as the present invention. However, the reflectance of the disclosed card was lower than the required level of 30%, and durability of the card was also unsatisfactory.

## Summary of the Invention

The object of the present invention is to provide an optical data storage card having reflectance of 30% or more which has not been obtained by the above conventional cards, and being excellent in sensitivity and durability.

As a result of an intensive investigation in order to accomplish the above object, the present inventors have found that, when a near infrared absorber contained in the recording layer of the optical data storage card has a melting point of from 150 to 300°C and a decomposition initiating temperature of from 200 to 350°C, the optical data storage card comprised of the recording layer containing the near infrared absorber is excellent in sensitivity for writing signals and symmetry of written signals and also has small distortion in recording.

They have also found that the optical data storage card can maintain a reflectance of 30% or more in a maximum absorption wavelength ranging from 770 to 840 nm by using in the recording layer a near infrared absorber having a maximum wavelength of from 730 to 790 nm in a chloroform solution.

The present inventors have also found that particularly the melting point and the decomposition initiating temperature have great contribution to the sensitivity in recording and stability in regeneration, and completed the invention on the basis of the discovery.

The optical data storage card of the invention has a laminated constitution in the order: a transparent substrate, the recording layer and a protective layer. The recording layer is characterized by containing the near infrared absorber composed of a compound or a mixture of the same having a melting point in the range of 150 to 300°C and a decomposition initiating temperature in the range of 200 to 350°C.

The melting point was measured with a common melting point tester. The decomposition initiating temperature was measured with a differential thermal-thermogravimetric simultaneous analyzer (DTA-TGA). The temperature of 5% decomposition was defined as the decomposition initiating temperature.

## Detailed Description of the Preferred Embodiments

The optical data storage card, that is, a rectangular recording medium which is used for an ID card and is composed of the substrate, recording layer and the protective layer is subjected to recording and regeneration with a semiconductor laser having a wavelength of from 780 to 830 nm. Hence, the recording layer preferably comprises a near infrared absorber having λmax in the range of from 730 to 790 nm in a chloroform solution. A near infrared absorber having a maximum molar extinction coefficient (εmax) of 1 x $10^5$ 1 $mol^{-1}$ $cm^{-1}$ or more is particularly preferred in view of sensitivity and regeneration. The ratio of reflecting light to the reading out light from the substrate side (reflectance) becomes 30 to 50% and both regeneration performance and writing sensitivity are improved.

The substrate for use in the optical data storage card of the present invention is an optically transparent resin. Exemplary resin used for the substrate includes acrylic resin, polyethylene resin, polyvinyl chloride

resin, polyvinylidene chloride resin, polycarbonate resin, ethylene resin, olefine copolymer resin, vinyl chloride copolymer resin, vinylidene chloride copolymer resin and styrene copolymer resin. The substrate may be surface treated with a thermosetting resin or an ultraviolet curing resin.

The near infrared absorbers which can be contained in the recording layer include, for example, phthalocyanine compounds and isomers of the same which are represented by the formula (I):

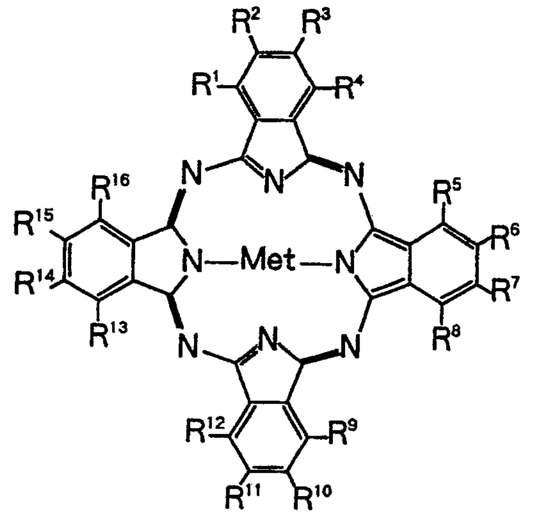

(I)

wherein each of $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$, and $R^{16}$ are individually a hydrogen atom, halogen atom, nitro, substituted or unsubstituted alkyl, substituted or unsubstituted aryl, substituted or unsubstituted alkoxy, substituted or unsubstituted aryloxy, substituted or unsubstituted alkylthio, or substituted or unsubstituted arylthio group; wherein, in a combination of $R^1$ and $R^4$, $R^5$ and $R^8$, $R^9$ and $R^{12}$, and $R^{13}$ and $R^{16}$, at least one group is selected from a substituted or unsubstituted alkoxy, substituted or unsubstituted aryloxy, substituted or unsubstituted alkylthio, and substituted or unsubstituted arylthio group; in $R^1$, $R^2$, $R^3$, $R^4$, $R^5$, $R^6$, $R^7$, $R^8$, $R^9$, $R^{10}$, $R^{11}$, $R^{12}$, $R^{13}$, $R^{14}$, $R^{15}$ and $R^{16}$, from 1 to 4 groups are halogen atoms; and Met is two hydrogen atoms, a divalent metal atom, or a trivalent or tetravalent metal derivative; and also include cyanine colorants, anthraquinone colorants, polyolefine colorants and thiapyrylium colorants. The optical data storage card having excellent recording sensitivity and recording properties can be obtained by selecting from these substances a colorant or a mixture of the same having a melting point of from 150 to 300°C and a decomposition initiating temperature of from 200 to 350°C.

The recording layer can be prepared by coating or vapor-depositing the above single compound or a mixture of the same into one or two layers. In a coating method, 20% by weight or less, preferably 0% by weight of a binder resin and from 0.05 to 20% by weight, preferably from 0.5 to 20% by weight of the above compound are dissolved in a solvent, and the resulting solution is coated with a spin coater. Vapor deposition method is carried out by depositing the above compound on the substrate under $10^{-5}$ to $10^{-7}$ torr at 100 to 300°C.

The thickness of the recording layer containing the near infrared absorber is preferably from 50 to 300 nm.

The solvent which can be used for the spin coating depends upon the solvent resistance of the substrate. Preferred solvents include, for example, halogenated hydrocarbons such as dichloromethane, chloroform, carbon tetrachloride, tetrachloroethylene and dichlorodifluoroethane; ethers such as diethyl ether, dipropyl ether and dibutyl ether; alcohols such as methanol, ethanol and propanol; cellosolves such as methyl cellosolve and ethyl cellosolve; and hydrocarbons such as hexane, cyclohexane, octane, benzene and toluene.

After preparing the recording layer on the substrate as mentioned above, an ultraviolet curing resin composition or a thermosetting resin composition is coated by a spin coating method, bar coater method or a dipping method and cured to obtain a protective layer. The thickness of the protective layer is preferably from 1 to 500 μm.

Preparation of the optical data storage card is preferably carried out by using polyacrylate or polycarbonate as a substrate and applying with a spin coating method in view of cost and easiness in

handling by customers.

The present invention will hereinafter be illustrated in detail by way of examples. However, these examples are not to be construed to limit the scope of the invention.

Part in the examples means part by weight.

Example 1

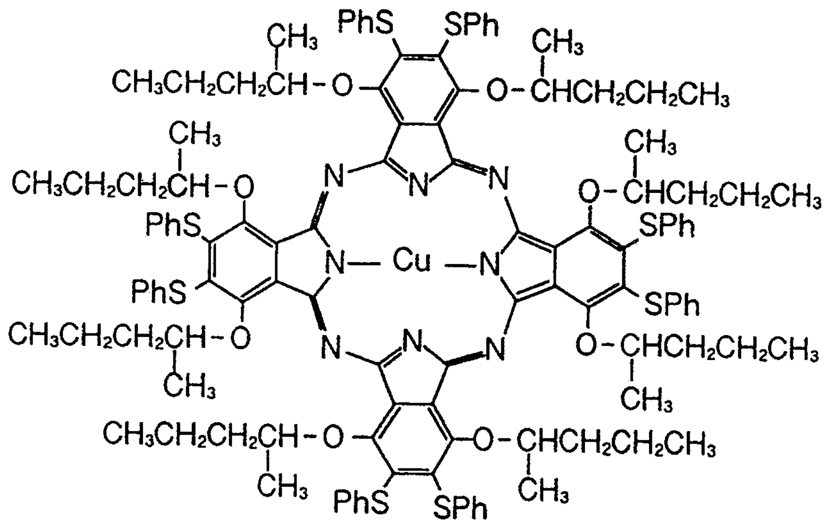

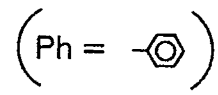

One part of the phthalocyanine illustrated by the formula and having a melting point of 250 °C or more, decomposition initiation temperature of 302 °C, λmax of 776 nm and εmax of 1.8 x $10^5$ 1 $mol^{-1}$ $cm^{-1}$ was dissolved in 100 parts of dibutyl ether and coated on a polycarbonate substrate of an optical data storage card. A photo-setting type polyacrylate resin was top-coated and cured by photo irradiation.

The optical data storage card obtained had a C/N ratio of 60 dB at a linear velocity of 1.4 m/sec and a laser power of 7 mW at 830 nm and thus sensitivity was good.

No deterioration of the recording layer was observed after irradiating in a fade meter at 63 °C for 100 hours.

Example 2

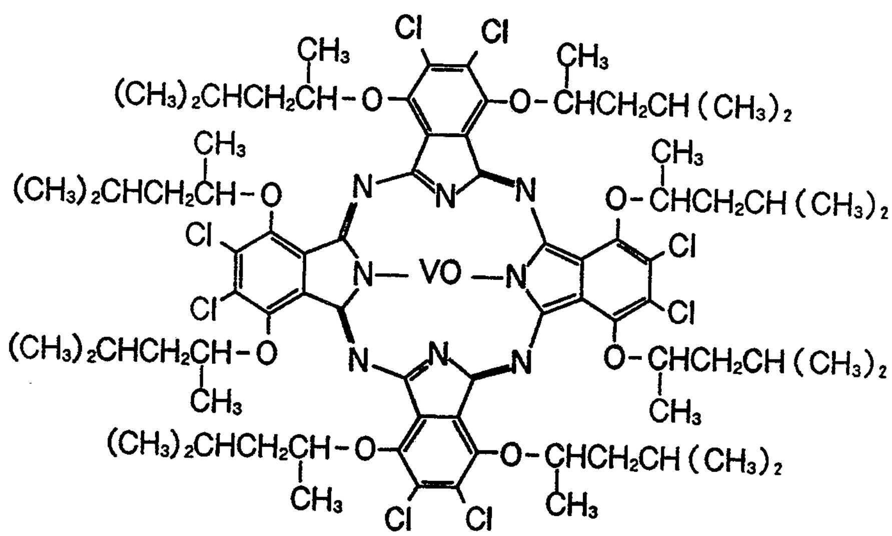

Five parts of the phthalocyanine illustrated by the above formula and having a melting point of 150° C, decomposition initiating temperature of 305° C, λmax of 770 nm and εmax of 2.0 x $10^5$ 1 $mol^{-1}$ $cm^{-1}$ were dissolved in 500 parts by n-octane and coated with a spin coater on a polycarbonate substrate for an optical data storage card so as to give a dry film thickness of 150 nm. An ultraviolet curing resin was coated on the film and cured by irradiating ultraviolet light to form a protective layer. The optical data storage card thus obtained had a reflectance of 35% and could be written a record having a C/N ratio of 60 dB at a linear velocity of 1.4 m/sec with a laser of 7 mW in power and 830 nm in wavelength. No change was found on the card after irradiation with a carbon arc lamp at 63° C for 200 hours.

Example 3

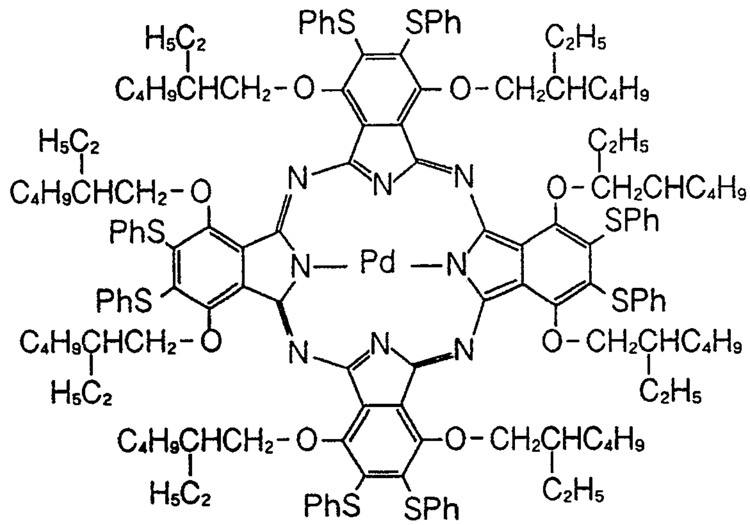

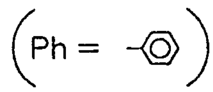

Five parts of palladium 1,4,5,8,9,12,13,16-octa(2-ethylhexyloxy)-2,3,6,7,10,11,14,15-octa(phenylthio)-phthalocyanine illustrated by the formula and having a melting point of 250 ° C or above, a decomposition initiating temperature of 252 ° C, λmax of 775 nm and εmax of 1.7 x $10^5$ 1 $mol^{-1}$ $cm^{-1}$ were dissolved in n-hexane and coated with a spin coater on a polycarbonate substrate to a film thickness of 120 nm. A protective layer was formed on the coated film by using ultraviolet curing resin.

The optical data storage card obtained was recorded at a linear velocity of 1.3 m/sec with a laser of 7 mW in power and 780 nm in wavelength to obtain record having a C/N ratio of 55 dB. No change was observed after irradiating the card with a xenon lamp at 50° C for 200 hours.

Example 4

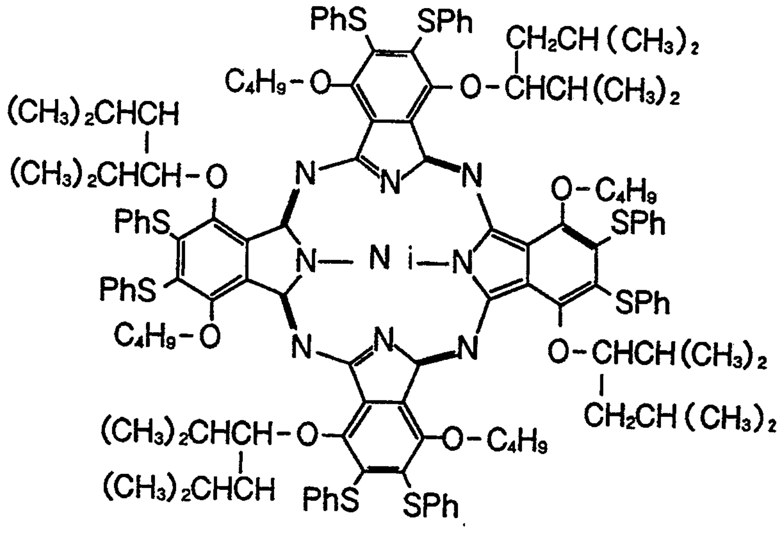

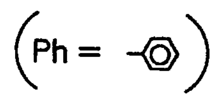

Five parts of phthalocyanine illustrated by the formula and having a melting point of 250°C or above, a decomposition initiating temperature of 350°C, λmax of 778 nm and εmax of 1.6 x $10^5$ 1 $mol^{-1}$ $cm^{-1}$ were dissolved in 300 parts of a 3:1 mixture of dibutyl ether and diisopropyl ether and coated on a PMMA substrate with a spin coater to a thickness of 120 nm. A protective layer was successively formed with an ultraviolet curing resin.

The optical data storage card thus obtained was recorded at a linear velocity of 1.4 m/sec with a laser of 8 mW in power and 830 nm in wavelength. A record having a C/N ratio of 60 dB was obtained.

Example 5

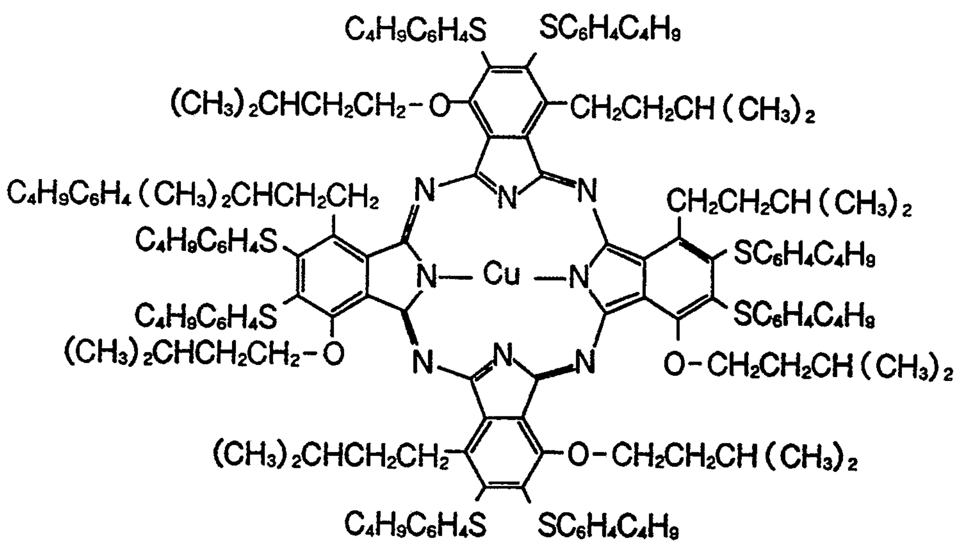

An optical data storage card was prepared by carrying out the same procedures as described in Example 1 except that phthalocyanine illustrated by the formula and having a melting point of 152°C, decomposition initiating temperature of 298°C, λmax of 773 nm and εmax of 1.7 x $10^5$ 1 $mol^{-1}$ $cm^{-1}$ was used.

The optical data storage card thus obtained was recorded at a linear velocity of 1.4 m/sec with a laser of 7 mW in power and 830 nm in wavelength to obtain a record having a C/N ratio of 60 dB.

As to regeneration stability,no change was observed on the signals after reading out 100,000 times with

a semiconductor laser having 1 mW in power and 830 nm in wavelength.

Example 6

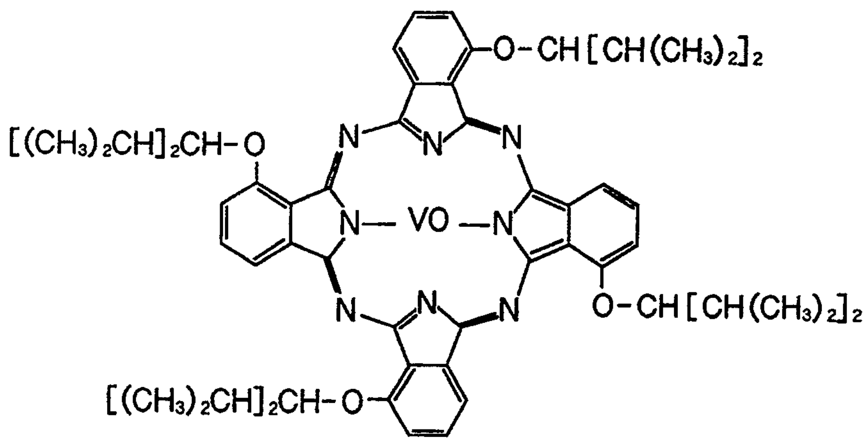

An optical data storage card was prepared by carrying out the same procedures as described in Example 1 except that phthalocyanine illustrated by the formula and having a melting point of 185 to 250° C, decomposition initiating temperature of 218° C, λmax of 734 nm and εmax of 2.0 x $10^5$ 1 $mol^{-1}$ $cm^{-1}$ was used.

The optical data storage card thus obtained was recorded at a linear velocity of 1.4 m/sec with a laser of 8 mW in power and 830 nm in wavelength to obtain a record having a C/N ratio of 60 dB.

As to regeneration stability, no change was observed on the signals after reading out 100,000 times with a semiconductor laser having 1 mW in power and 830 nm in wavelength.

Example 7

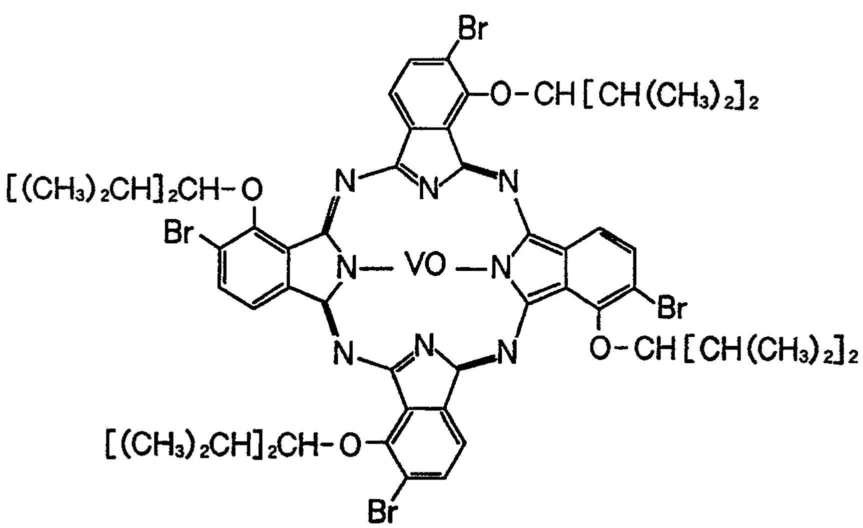

An optical data storage card was prepared by carrying out the same procedures as described in Example 1 except that phthalocyanine illustrated by the formula and having a melting point of 200 to 235° C, decomposition initiating temperature of 206° C, λmax of 750 nm and εmax of 1.9 x $10^5$ 1 $mol^{-1}$

cm$^{-1}$ was used.

The optical data storage card thus obtained was recorded at a linear velocity of 1.3 m/sec with a laser of 7 mW in power and 830 nm in wavelength to obtain a record having a C/N ratio of 55 dB.

Example 8

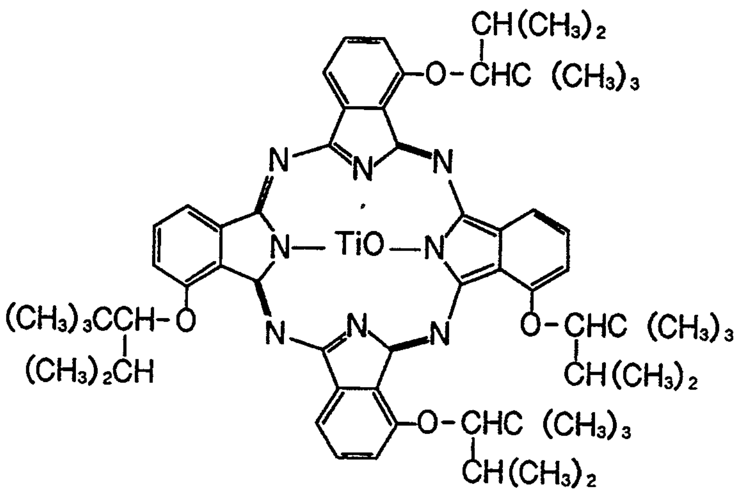

An optical data storage card was prepared by carrying out the same procedures as described in Example 1 except that phthalocyanine illustrated by the formula and having a melting point of 260 °C, decomposition initiating temperature of 272 °C, λmax of 739 nm and εmax of 2.0 x $10^5$ 1 mol$^{-1}$ cm$^{-1}$ was used.

The optical data storage card thus obtained was recorded at a linear velocity of 1.4 m/sec with a laser of 7.5 mW in power and 830 nm in wavelength to obtain a record having a C/N ratio of 61 dB.

Example 9

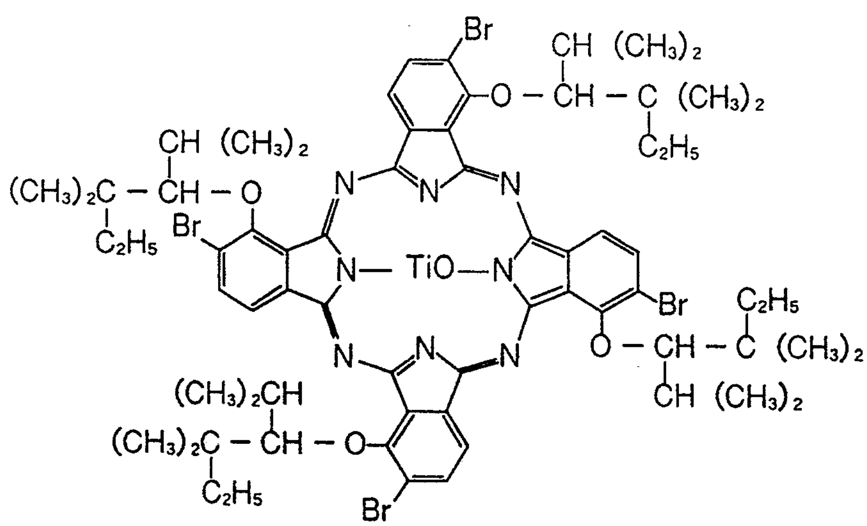

An optical data storage card was prepared by carrying out the same procedures as described in Example 1 except that phthalocyanine illustrated by the formula and having a melting point of 255 °C, a

decomposition initiating temperature of 267 °C, λmax of 759 nm and εmax of 1.9 x $10^5$ 1 $mol^{-1}$ $cm^{-1}$ was used.

The optical data storage card thus obtained was recorded at a linear velocity of 1.3 m/sec with a laser of 7.5 mW in power and 830 nm in wavelength to obtain a record having a C/N ratio of 60 dB.

Example 10

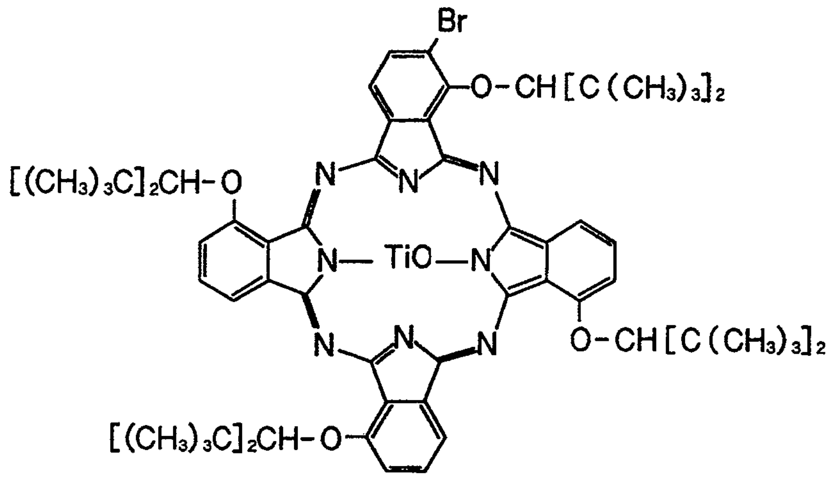

An optical data storage card was prepared by carrying out the same procedures as described in Example 1 except that phthalocyanine illustrated by the formula and having a melting point of 260 °C, a decomposition initiating temperature of 280 °C, λmax of 732 nm and εmax of 2.1 x $10^5$ 1 $mol^{-1}$ $cm^{-1}$ was used.

The optical data storage card thus obtained was recorded at a linear velocity of 1.4 m/sec with a laser of 7 mW in power and 830 nm in wavelength to obtain a record having a C/N ratio of 57 dB.

Comparative Test

The above obtained optical data storage cards of the invention were compared their performance with optical data storage cards prepared by using known conditions.

The optical data storage cards prepared in examples 2, 4 and 5 were used as the cards of the invention. The cards prepared by using 6 known colorants described below were used as comparative examples.

Comparative Example 1

The compound having the following formula was used according to Japanese Laid-Open Patent 138382 (1990).

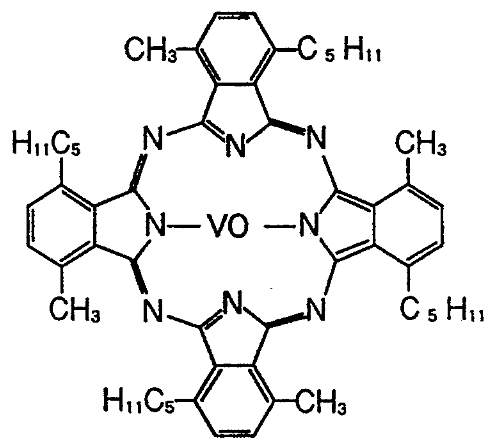

Comparative Example 2

The colorant having the illustrated formula was used according to Japanese Laid-Open Patent 24692 (1984).

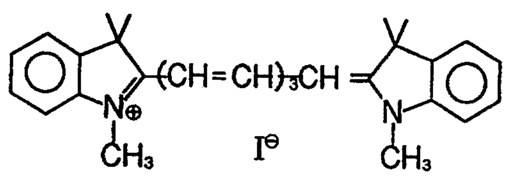

Comparative Example 3

An optical data storage card was prepared by using colorant, SPIRON BLACK MH SPECIAL N, according to Japanese Laid-Open Patent 130737 (1990).

Comparative Example 4

An inorganic compound was used for recording layer according to Japanese Laid-Open Patent 122438 (1990).

Comparative Example 5

An optical data storage card was prepared by carrying out the same procedures as described in Example 1 except that a colorant having the illustrated formula, a melting point of 80 to 90°C and a decomposition initiating temperature of 310°C was used.

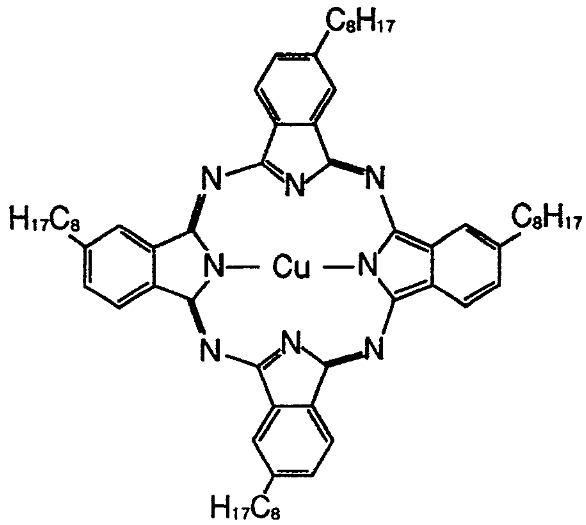

Comparative Example 6

An optical data storage card was prepared by carrying out the same procedures as described in Example 1 except that a colorant having the illustrated formula, a melting point of higher than 140 °C and a decomposition initiating temperature of 320 °C was used.

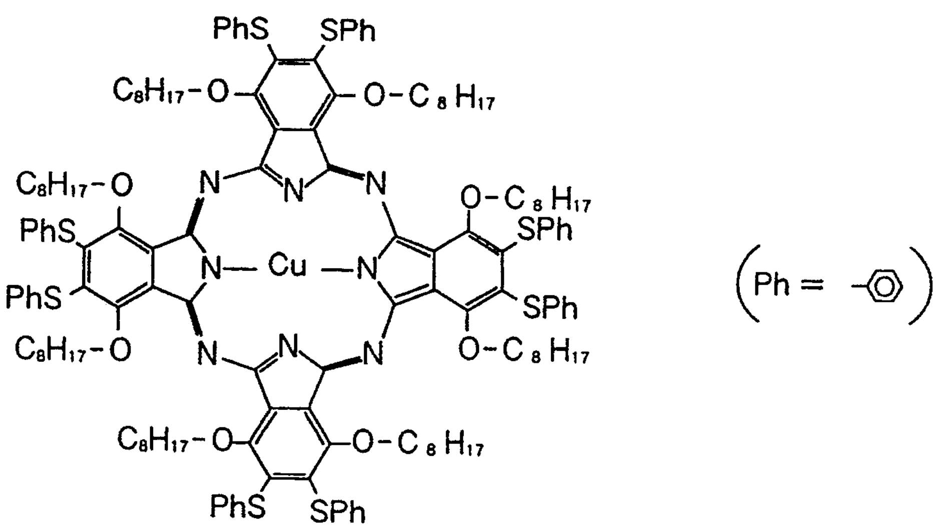

In the above comparative examples, properties of the media obtained were measured by the following methods. Results were compared with those obtained by Examples and summarized in Table 1. Evaluation was made by the following standards.

| | |
|---|---|
| Reflectance | measured with a light beam having a wavelength of 780 nm. |
| Sensitivity | measured at a linear velocity of 1.4 m/sec and a wavelength of 780 nm. |
| Symmetry | measured at a recording power ranging from 5 to 90 mW. |
| O | less than 5% fluctuation |
| X | more than 5% fluctuation |
| Pulse duration correction | Necessary correction range was measured by writing 4T signal (231 × 4 = 924 nsec). |

| | |
|---|---|
| O | correction range: 0 to -100 nsec |
| Δ | correction range: -100 to -200 nsec |
| X | correction range: more than -200 nsec |
| Record distortion | Distortion of recorded waveform was measured with an oscilloscope. Distortion of gold layer was examined by observing recording pit under microscope. |
| O | no distortion |
| X | distortion found |
| Durability | Measured by variation in record (stability of regenerated light) after reading out $10^5$ times at a linear velocity of 1.4 m/sec with power of 0.5 mW and by variation of record after a daylight exposure fastness acceleration test with a xenon lamp at 40° C for 100 hours. |
| O | Each variation is less than 10%. |
| Δ | Each variation is from 10 to 20%. |
| X | Each variation is more than 20%. |

Table 1

| Medium | Reflectance (%) | Sensitivity (mW/dB) | Symmetry | Pulse duration correction | Record distortion | Durability |
|---|---|---|---|---|---|---|
| Example 2 | 35 | 7/60 | ○ | ○ | ○ | ○ |
| Example 4 | 32 | 9/55 | ○ | ○ | ○ | ○ |
| Example 5 | 32 | 7/60 | ○ | ○ | ○ | ○ |
| Comp. Ex. 1 | 30 | 10/40 | × | × | × | ○ |
| Comp. Ex. 2 | 35 | 12/55 | × | × | × | △ |
| Comp. Ex. 3 | 12 | 12/50 | × | × | × | △ |
| Comp. Ex. 4 | 15 | 15/50 | × | × | × | ○ |
| Comp. Ex. 5 | 35 | 15/50 | × | × | × | ○ |
| Comp. Ex. 6 | 34 | 7/50 | × | × | × | △ |

Table 1 (cont'd)

| | Melting point (℃) | Decomp. init. temperature* (℃) | λ max (nm) | ε max ($1\ mol^{-1}\ cm^{-1}$) |
|---|---|---|---|---|
| Example 2 | 150 | 305 | 770 | $2.0 \times 10^5$ |
| Example 4 | >250 | 350 | 778 | $1.6 \times 10^5$ |
| Example 5 | 152 | 298 | 773 | $1.7 \times 10^5$ |
| Comp. Ex. 1 | 175 | 400 | 722 | |
| Comp. Ex. 2 | —*** | 200 | 741 | |
| Comp. Ex. 3 | 162 | 180 | 680 | |
| Comp. Ex. 4 | —** | — | — | |
| Comp. Ex. 5 | 80-90 | 310 | 690 | |
| Comp. Ex. 6 | 140 | 320 | 778 | |

Note: * Measured by TG-DTA
** No data because of inorganic medium
*** Decomposition at melting point

## Claims

1. An optical data storage card having a laminated constitution in the order: a transparent substrate, a recording layer and a protective layer, said recording layer comprising a near infrared absorber composed of a compound or a mixture of the same having a melting point in the range of 150 to 300 °C and a decomposition initiating temperature in the range of 200 to 350 °C.

2. The optical data storage card of claim 1 wherein the recording layer comprises the near infrared absorber having a maximum absorption wavelength of from 730 to 790 nm in a chloroform solution.

3. The optical data storage card of claim 2 wherein the near infrared absorber has a maximum molar extinction coefficient of $1 \times 10^5\ 1\ mol^{-1}\ cm^{-1}$ or more at the maximum absorption wavelength in the chloroform solution.

4. The optical data storage card of claim 3 wherein the near infrared absorber which constitutes the recording layer has reflectance in the range of 30 to 50% from the substrate side.

5. The optical data storage card of claim 4 wherein the near infrared absorber which constitutes the recording layer is a phthalocyanine.

European Patent Office

# EUROPEAN SEARCH REPORT

Application Number

**EP 91 10 5392**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 337 209 (MITSUI TOATSU CHEM. INC.)<br>* claims 1-24 *<br>– – – | 1-5 | G 11 B 7/24 |
| X | EP-A-0 212 907 (MITSUI TOATSU CHEM. INC.)<br>* claims 1-9 *<br>– – – | 1-5 | |
| X | EP-A-0 232 964 (TORAY INDUSTRIES INC.)<br>* claims 1-17 *<br>– – – | 1-5 | |
| X | EP-A-0 302 497 (CANON K.K.)<br>* page 14, line 12 - page 15, line 5; claims 1-10 *<br>– – – | 1-5 | |
| A | EP-A-0 272 565 (BASF A.G.)<br>* claims 1-11 *<br>– – – | 1-5 | |
| A | EP-A-0 285 965 (BASF A.G.)<br>* claims 1-4 *<br>– – – – – | 1-5 | |
| | | | TECHNICAL FIELDS SEARCHED (Int. Cl.5) |
| | | | G 11 B |

The present search report has been drawn up for all claims

| Place of search | Date of completion of search | Examiner |
|---|---|---|
| The Hague | 29 July 91 | BATTISTIG M.L.A. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document